(19) **Europäisches Patentamt / European Patent Office / Office européen des brevets**

(11) **EP 4 692 245 A1**

(12) **EUROPEAN PATENT APPLICATION**
published in accordance with Art. 153(4) EPC

(43) Date of publication:
**11.02.2026 Bulletin 2026/07**

(21) Application number: **24784595.1**

(22) Date of filing: **09.02.2024**

(51) International Patent Classification (IPC):
**C08L 101/00** (2006.01)    **C08L 25/12** (2006.01)
**C08L 55/00** (2006.01)    **C08L 69/00** (2006.01)

(52) Cooperative Patent Classification (CPC):
**C08L 25/12; C08L 55/00; C08L 69/00; C08L 101/00**

(86) International application number:
**PCT/JP2024/004528**

(87) International publication number:
**WO 2024/209792 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.04.2023 JP 2023062220**

(71) Applicant: **Techno-UMG Co., Ltd.
Tokyo 105-0021 (JP)**

(72) Inventors:
• **YAMASHITA, Shinji
Tokyo 105-0021 (JP)**
• **KIJIMA, Makoto
Tokyo 105-0021 (JP)**

(74) Representative: **Vossius & Partner
Patentanwälte Rechtsanwälte mbB
Siebertstrasse 3
81675 München (DE)**

(54) **THERMOPLASTIC RESIN COMPOSITION, RESIN MOLDED ARTICLE, AND PLATED COMPONENT**

(57) A thermoplastic resin composition containing a resin component of 100 parts by mass, the resin component containing: 10 to 50 parts by mass of a rubber-containing graft copolymer (A); and 50 to 90 parts by mass of another resin, the rubber-containing graft copolymer (A) being obtained by graft polymerizing 30 to 80% by mass of a rubbery polymer (a1) with 20 to 70% by mass of a vinyl-based monomer mixture (a2) containing an aromatic vinyl-based monomer and a vinyl cyanide-based monomer wherein a total of the rubbery polymer (a1) and the vinyl-based monomer mixture (a2) is 100% by mass. A content of the vinyl cyanide-based monomer component in a total of an acetone-soluble matter contained in the thermoplastic resin composition is 20 to 40% by mass. A content of a metal oxide (D) in the thermoplastic resin composition is 4500 ppm or less.

EP 4 692 245 A1

## Description

Technical Field

The present invention relates to a thermoplastic resin composition that has no appearance defects (particularly seediness and plating unevenness) in a plating film regardless of the thickness of the plating film or the location where the plating film is formed, has excellent plating film formability (which may be referred to as plating property, electrodeposition property or covering property in the present invention), can form a plating film having high adhesion strength, and can maintain excellent plating appearance even after heat and cold cycles. The present invention also relates to a resin molded article of the thermoplastic resin composition and a plated part using the resin molded article.

Background Art

Molded articles made of ABS resin have excellent impact resistance, mechanical strength, and chemical resistance, and are used in a wide range of fields such as office equipment, information and communication equipment, electronic and electrical equipment, home appliances, automobiles, architecture, and the like. Furthermore, when molded articles made of ABS resin are plated to produce plated articles, they have characteristics of excellent plating appearance, high adhesion strength of the plating film, and excellent heat and cold cycle properties, therefore they are used in a wide variety of applications as plastic plated parts.

The plating property of a plastic plated part is easily affected by factors such as the properties of the resin composition that forms the molded article and the molding conditions. Even when a resin composition containing ABS resin is used, there is a possibility that poor plating appearance will occur.

As a thermoplastic resin composition that has high adhesion strength of a plating film and suppresses swelling and deterioration of adhesion strength of the plating film during heat and cold cycles, a thermoplastic resin composition that has improved plating property by using a specified graft copolymer and having a specified oligomer content has been proposed (Patent Literature 1).

However, even this thermoplastic resin composition has the following problems.

The plating film cannot be formed where it is needed;

even if it can be formed, it causes poor appearance; and

even if the initial adhesion strength of the plating film is high, the adhesion strength decreases after heat and cold cycles, which may impair the quality of the final product and even its function.

Citation List

Patent Literature

Patent Literature 1: JP 2020-158706 A

Summary of Invention

Technical Problem

An object of the present invention is to provide a thermoplastic resin composition that has no appearance defects (particularly seediness and plating unevenness) in a plating film regardless of the thickness of the plating film or the location where the plating film is formed, has excellent plating property, can form a plating film having high adhesion strength, and can maintain excellent plating appearance even after heat and cold cycles. Another object of the present invention is to provide a resin molded article of the thermoplastic resin composition and a plated part.

Solution to Problem

The present inventor has found that the above problem can be solved by setting a content of a vinyl cyanide-based monomer component in an acetone-soluble matter in a thermoplastic resin composition within a specific range and setting a content of a metal oxide to a specific value or less.

The present invention was achieved based on this finding, and is summarized as follows.

[1] A thermoplastic resin composition comprising a resin component of 100 parts by mass, the resin component comprising:

10 to 50 parts by mass of a rubber-containing graft copolymer (A); and

50 to 90 parts by mass of another resin,

the rubber-containing graft copolymer (A) being obtained by graft polymerizing 30 to 80% by mass of a rubbery polymer (a1) with 20 to 70% by mass of a vinyl-based monomer mixture (a2) comprising an aromatic vinyl-based monomer and a vinyl cyanide-based monomer wherein a total of the rubbery polymer (a1) and the vinyl-based monomer mixture (a2) is 100% by mass,

wherein a content of the vinyl cyanide-based monomer component in a total of an acetone-soluble matter contained in the thermoplastic resin composition is 20 to 40% by mass, and

a content of a metal oxide (D) in the thermoplastic resin composition is 4500 ppm or less.

[2] The thermoplastic resin composition according to [1], wherein the other resin includes an AS-based resin (B) and/or an aromatic polycarbonate resin (C).

[3] The thermoplastic resin composition according to [1] or [2], wherein the other resin includes a recycled resin (E).

[4] A resin molded article produced by molding the thermoplastic resin composition according to any one of [1] to [3].

[5] A plated part wherein plating is applied to a part or the whole of the resin molded article according to [4].

Advantageous Effects of Invention

According to the thermoplastic resin composition of the present invention, it is possible to form a plating film, which has no appearance defects (particularly seediness and plating unevenness) regardless of the thickness of the plating film or the location where the plating film is formed, has excellent plating property, and has excellent plating appearance and high adhesion strength even after heat and cold cycles, on the resin molded article made of the thermoplastic resin composition.
Thus, even when a plating film having a small thickness is formed, the plating film can have excellent appearance, adhesion strength, and durability against heat and cold cycles. This makes it possible to reduce a weight of the plated part without compromising on decorativeness, and to shorten the plating process time and reduce the incidence of defective products.
It is also possible to make effective use of recycled resins, and to realize environmentally friendly product designs.

Description of Embodiments

Embodiments according to the present invention will be described below in detail.
In the present invention, a "resin molded article" is one that is formed by molding the thermoplastic resin composition of the present invention.
A "plated part" is a resin molded article that has been plated, and has a plating film on at least a portion of the surface of the resin molded article.
In the present invention, "plating property" refers to the electrodeposition and covering property based on the "formability of the plating film" and the "characteristics of the formed plating film".
The numerical range indicated by "to" means that the numerical range includes the numerical range before and after it as the lower limit and upper limit.

(Thermoplastic resin composition)

The thermoplastic resin composition of the present invention is a thermoplastic resin composition comprising a resin component of 100 parts by mass, the resin component comprising: 10 to 50 parts by mass of a rubber-containing graft copolymer (A); and 50 to 90 parts by mass of another resin, the rubber-containing graft copolymer (A) being obtained by graft polymerizing 30 to 80% by mass of a rubbery polymer (a1) with 20 to 70% by mass of a vinyl-based monomer mixture (a2) comprising an aromatic vinyl-based monomer and a vinyl cyanide-based monomer wherein a total of the rubbery polymer (a1) and the vinyl-based monomer mixture (a2) is 100% by mass, wherein a content of the vinyl cyanide-based monomer component in a total of an acetone-soluble matter contained in the thermoplastic resin composition is 20 to 40% by mass, and a content of a metal oxide (D) in the thermoplastic resin composition is 4500 ppm or less.

[Rubber-containing graft copolymer (A)]

The rubber-containing graft copolymer (A) is obtained by graft polymerizing a vinyl-based monomer mixture (a2) in the presence of a rubbery polymer (a1).

<Rubbery polymer (a1)>

There are no particular limitations on the rubbery polymer (a1) (hereinafter sometimes referred to as the "component (a1)") that constitutes the rubber-containing graft copolymer (A). Examples of the component (a1) include diene-based rubber, acrylic-based rubber, ethylene-based rubber, and the like. Specific examples thereof include polybutadiene, poly(butadiene-styrene), poly(butadiene-acrylonitrile), polyisoprene, poly(butadiene-butyl acrylate), poly(butadiene-methyl acrylate), polybutyl acrylate, poly(butadiene-methyl methacrylate), poly(butadiene-ethyl acrylate), ethylene-propylene rubber, ethylene-propylene-diene rubber, poly(ethylene-isobutylene), poly(ethylene-methyl acrylate), poly(ethylene-ethyl acrylate), and the like. These rubbery polymers are used alone or in a mixture of two or more. Among these, polybutadiene, poly(butadiene-styrene), poly(butadiene-acrylonitrile), poly(butadiene-butyl acrylate), and poly(butadiene-methyl acrylate) are preferred. Furthermore, polybutadiene and poly(butadienestyrene) are preferably used because they provide the thermoplastic resin composition of the present invention having excellent impact resistance and plating property.

The volume average particle size of the rubbery polymer (a1) is preferably 50 to 500 nm, more preferably 150 to 400 nm, even more preferably 250 to 340 nm, and most preferably 270 to 330 nm, from the viewpoints of the impact resistance, fluidity, and plating property of the resulting thermoplastic resin composition.

The volume average particle size of the rubbery polymer (a1) is a value measured by the method described in the Examples section below.

The volume average particle size of the rubbery polymer (a1) may be measured when used, or can also be confirmed by image analysis using an electron microscope photograph of the resin composition.

<Vinyl-based monomer mixture (a2)>

The vinyl-based monomer mixture (a2) (hereinafter sometimes referred to as the "component (a2)") is a vinyl-based monomer mixture containing at least an aromatic vinyl-based monomer and a vinyl cyanide-based monomer.

Examples of the aromatic vinyl-based monomer include styrene, $\alpha$-methylstyrene, p-methylstyrene, vinyltoluene, t-butylstyrene, o-ethylstyrene, o-chlorostyrene, and o,p-dichlorostyrene. As the aromatic vinyl-based monomer, styrene and $\alpha$-methylstyrene are particularly preferred. The aromatic vinyl-based monomer may be used alone or in combination of two or more kinds.

Examples of the vinyl cyanide-based monomer include acrylonitrile, methacrylonitrile, ethacrylonitrile, and the like. As the vinyl cyanide-based monomer, acrylonitrile is particularly preferred. The vinyl cyanide-based monomer may be used alone or in combination of two or more kinds.

The ratio of the aromatic vinyl-based monomer and the vinyl cyanide-based monomer in 100% by mass of the vinyl-based monomer mixture (a2) is preferably aromatic vinyl-based monomer/vinyl cyanide-based monomer=60 to 80% by mass/20 to 40% by mass, more preferably 65 to 80% by mass/20 to 35% by mass, and even more preferably 67 to 76% by mass/24 to 33% by mass, from the viewpoints of the moldability of the resulting thermoplastic resin composition and the appearance of the molded article.

The vinyl-based monomer mixture (a2) may contain, in addition to the aromatic vinyl-based monomer and the vinyl cyanide-based monomer, 0 to 30% by mass of other vinyl-based monomers copolymerizable with these. Examples of the other vinyl-based monomers copolymerizable with these include one or more of unsaturated carboxylic acid esterbased monomers such as methyl (meth)acrylate, and the like; maleimide-based monomers such as N-methylmaleimide, N-cyclohexylmaleimide, N-phenylmaleimide, and the like; unsaturated dicarboxylic acids such as maleic acid, and the like; unsaturated dicarboxylic anhydrides such as maleic anhydride, and the like; and unsaturated amides such as acrylamide, and the like. However, the other vinyl-based monomer is not limited to these. Among these, methyl (meth)acrylate, N-phenylmaleimide, and maleic anhydride are preferred. Note that "(meth)acrylic acid" refers to either or both of acrylic acid and methacrylic acid.

<Ratio of the rubbery polymer (a1) and vinyl-based monomer mixture (a2)>

The rubber-containing graft copolymer (A) is obtained by graftpolymerizing 20 to 70% by mass of the vinyl-based monomer mixture (a2) in the presence of 30 to 80% by mass of the rubbery polymer (a1). Here, the total of the rubbery polymer (a1) and the vinyl-based monomer mixture (a2) is 100% by mass.

When the ratio of the rubbery polymer (a1) is less than 30% by mass and the ratio of the vinyl-based monomer mixture (a2) is more than 70% by mass, the resulting thermoplastic resin composition tends to have poor impact resistance. When the ratio of the rubbery polymer (a1) is more than 80% by mass and the ratio of the vinyl-based monomer mixture (a2) is less than 20% by mass, the impact resistance and moldability tend to decrease. The ratio of the rubbery polymer (a1) is preferably 35 to 70% by mass, and more preferably 40 to 65% by mass, and the ratio of the vinyl-based monomer mixture (a2) is preferably 30 to 65% by mass, and more preferably 35 to 60% by mass.

The rubber-containing graft copolymer (A) does not need to be entirely grafted with the vinyl-based monomer mixture (a2), and is usually obtained as a mixture with a non-grafted copolymer. This mixture is essentially a composition, but in the present invention, it is included in the rubber-containing graft copolymer (A). The non-grafted copolymer is extracted as an acetone-soluble matter.

<Graft rate>

There is no particular restriction on the graft rate of the rubber-containing graft copolymer (A). From the viewpoint of the impact resistance, the graft rate of the rubber-containing graft copolymer (A) is preferably 10 to 150% by mass, more preferably 20 to 120% by mass, and even more preferably 30 to 90% by mass.

The graft rate of the rubber-containing graft copolymer (A) is measured by the method described in the Examples section below.

<Molecular weight of the non-grafted copolymer>

The composition of the non-grafted copolymer in the rubber-containing graft copolymer (A), i.e., the acetone-soluble matter of the rubber-containing graft copolymer (A), falls within the range of the blending ratio of the monomer component, i.e., the vinyl-based monomer mixture (a2).

The mass average molecular weight (Mw) of the non-grafted copolymer is preferably 20,000 to 400,000, more preferably 30,000 to 200,000, and even more preferably 40,000 to 100,000. The molecular weight distribution (Mw/Mn) of the non-grafted copolymer is preferably 2.0 to 4.0, more preferably 2.5 to 3.5, and even more preferably 2.7 to 3.2. When the mass average molecular weight (Mw) and the molecular weight distribution (Mw/Mn) are within the above ranges, the resulting thermoplastic resin composition tends to have better fluidity and impact resistance.

Here, the mass average molecular weight (Mw) and the molecular weight distribution (Mw/Mn) of the non-grafted copolymer (acetone soluble matter) can be measured as polystyrene equivalent values by GPC. Details are as described in the Examples section below.

<Graft polymerization method>

There are no particular restrictions on the method of the graft polymerization of the rubber-containing graft copolymer (A). The rubber-containing graft copolymer (A) can be produced by any known method such as an emulsion polymerization method, a suspension polymerization method, a continuous bulk polymerization method, a continuous solution polymerization method, and the like. Among these, an emulsion polymerization method is particularly preferred. The emulsion polymerization method is preferred because of the following advantages: the rubber content of the rubber-containing graft copolymer (A) can be easily adjusted; the generation of oligomers derived from the grafted monomer is extremely small; no organic solvents such as toluene, benzene or the like are used, so these do not remain; and, the rubber content can be easily adjusted, resulting in excellent handling properties, product safety, and the like.

In the production process by the emulsion polymerization method, examples of the coagulant used when recovering the product from the emulsion state include metal salts such as calcium chloride, calcium acetate, aluminum sulfate, and the like, and inorganic acids such as sulfuric acid, hydrochloric acid, phosphoric acid, nitric acid, and the like. Among these, the graft copolymer recovered using an inorganic acid is preferred. This reduces the influence on the adhesion strength of the plating, deterioration and discoloration of the thermoplastic resin composition, and enables the performance of the final part to be maintained for a particularly long period of time.

The coagulant is selected depending on the emulsifier. When a carboxylic acid soap such as a fatty acid soap, a rosin acid soap, or the like is used as the emulsifier, either coagulant can be used for recovery. In this case, it is particularly preferable to coagulate and recover using the inorganic acid, especially sulfuric acid. However, when the product is coagulated with sulfuric acid and then neutralized with sodium hydroxide, and the like, it is difficult to obtain the performance of the final part. Therefore, after coagulation, only rinsing with water is sufficient.

The amount of the coagulant added is usually 1 to 5 parts by mass based on 100 parts by mass of the polymer latex, and the preferred range is 2 to 4 parts by mass. The coagulant is usually diluted to 1% to 20% as a solution. The temperature during coagulation can be set appropriately. The temperature is usually in the range of 50 to 95°C.

Only one type of rubber-containing graft copolymer (A) may be used. Depending on the purpose, the rubber-containing graft copolymer (A) may be a blend of multiple rubber-containing graft copolymers produced separately, such as those having different types of rubbery polymers, different rubber particle sizes, different compositions of the graft copolymer components, or the like.

<Content of the rubber-containing graft copolymer (A)>

In the thermoplastic resin composition of the present invention, the content of the component (A) in 100 parts by mass of the total of the resin components consisting of the component (A) and the other resin is 10 to 50 parts by mass, preferably 12 to 45 parts by mass, more preferably 15 to 40 parts by mass, and even more preferably 20 to 35 parts by mass. When the content of the component (A) is equal to or more than the above mentioned lower limit, the impact resistance and plating property are good. When the content of the component (A) is equal to or less than the above mentioned upper limit, the moldability and adhesion strength of the plating film are good.

<Content of the rubbery polymer (a1) >

The content of the rubbery polymer (a1) in 100% by mass of the thermoplastic resin composition of the present invention is preferably 8 to 40% by mass, more preferably 10 to 30% by mass, and even more preferably 12 to 20% by mass. When the content of the rubbery polymer (a1) is equal to or more than the above mentioned lower limit, the impact resistance is good. When the content of the rubbery polymer (a1) is equal to or less than the above mentioned upper limit, the moldability is excellent, and the plating property of a large molded article and the like is also suitable.

[Other resin]

The other resin used in the present invention are not particularly limited as long as they are thermoplastic resins. Examples of the other resin include one or more of polyvinyl chloride resin, polystyrene resin, AS-based resin, polymethyl methacrylate resin, methyl methacrylate-styrene copolymer resin, methyl methacrylate-N-phenylmaleimide copolymer resin, aromatic polycarbonate resin, polyamide resin, polyester-based resin such as polyethylene terephthalate resin, polybutylene terephthalate resin, and the like, olefin-based resin such as polyphenylene ether-polystyrene composite resin, polypropylene resin, polyethylene resin, and the like, styrene-maleic anhydride copolymer resin, polyphenylene ether-based resin, polyoxymethylene-based resin, polysulfone-based resin, polyacrylate-based resin, polyphenylene-based resin, thermoplastic polyurethane, polylactic acid, bioplastics derived from plants, and the like. Among these, the AS-based resin (B) and the aromatic polycarbonate resin (C) described below are particularly preferred as impact-resistant plating materials.

The other resin may be a resin (E) recycled from resin molded articles containing these thermoplastic resins.

In the thermoplastic resin composition of the present invention, the content of the other resin in 100 parts by mass of the total of the resin components consisting of the component (A) and the other resin is 50 to 90 parts by mass, preferably 55 to 88 parts by mass, more preferably 60 to 85 parts by mass, and even more preferably 65 to 80 parts by mass. When the content of the other resin is equal to or less than the above mentioned upper limit, the impact resistance and the plating property are good. When the content of the other resin is equal to or more than the above mentioned lower limit, the adhesion strength of the plating film after the heat and cold cycles is good.

[AS-based resin (B)]

The AS-based resin (B) (hereinafter sometimes referred to as the "component (B)") is a copolymer obtained by copolymerizing a vinyl-based monomer mixture (b1) containing a vinyl cyanide-based monomer and an aromatic vinyl-based monomer.

Examples of the vinyl cyanide-based monomer include acrylonitrile, methacrylonitrile, ethacrylonitrile, and the like. Acrylonitrile is particularly preferred. The vinyl cyanide-based monomer may be used alone or in combination of two or more kinds.

Examples of the aromatic vinyl-based monomer include styrene, $\alpha$-methylstyrene, p-methylstyrene, vinyltoluene, t-butylstyrene, o-ethylstyrene, o-chlorostyrene, and o,p-dichlorostyrene. Styrene and $\alpha$-methylstyrene are particularly preferred. The aromatic vinyl-based monomer may be used alone or in combination of two or more kinds.

From the viewpoints of the moldability and plating property of the resulting thermoplastic resin composition, the ratio of the vinyl cyanide-based monomer and the aromatic vinyl-based monomer in 100% by mass of the vinyl-based monomer mixture (b1) is vinyl cyanide-based monomer/aromatic vinyl-based monomer=20 to 40% by mass/60 to 80% by mass, preferably 22 to 38% by mass/62 to 78% by mass, more preferably 24 to 35% by mass/65 to 76% by mass, even more preferably 25 to 32% by mass/68 to 75% by mass, and most preferably 25 to 29% by mass/71 to 75% by mass.

The vinyl-based monomer mixture (b1) may contain, in addition to the vinyl cyanide-based monomer and the aromatic vinyl-based monomer, 0 to 30% by mass of other vinyl-based monomers copolymerizable with tease. Examples of the other vinyl-based monomers copolymerizable with these include one or more of unsaturated carboxylic acid ester-based monomers such as methyl (meth)acrylate, and the like; maleimide-based monomers such as N-methylmaleimide, N-cyclohexylmaleimide, N-phenylmaleimide, and the like; unsaturated dicarboxylic acids such as maleic acid, and the like; unsaturated dicarboxylic anhydrides such as maleic anhydride, and the like; and unsaturated amides such as acrylamide, and the like. However, the other vinyl-based monomer is not limited to these. Among these, methyl (meth) acrylate, N-phenylmaleimide, and maleic anhydride are preferred.

The mass average molecular weight (Mw) of the AS-based resin (B) is preferably 50,000 to 300,000, more preferably 65,000 to 200,000, and even more preferably 80,000 to 150,000. The molecular weight distribution (Mw/Mn) of the AS-based resin (B) is preferably 1.3 to 2.8, more preferably 1.8 to 2.6, and even more preferably 1.7 to 2.4.

Here, the mass average molecular weight and the molecular weight distribution (Mw/Mn) of the AS-based resin (B) can be measured as polystyrene equivalent values by GPC. Details are as described in the Examples section below.

Only one type of the AS-based resin (B) may be used, or two or more types having different monomer compositions, molecular weights, and the like may be mixed and used.

The method for producing the AS-based resin (B) is not particularly limited, and examples thereof include a bulk polymerization method, a solution polymerization method, a suspension polymerization method, an emulsion polymerization method, and the like. When volatile components or oligomers are generated during the producing process, they can easily cause appearance defects such as silver streaks and the like when molding resin articles. For this reason, measures must be taken to prevent defective articles from being produced, such as by degassing the molding die and cleaning the die. In particular, the bulk polymerization method and the solution polymerization are prone to the formation of oligomers. For this reason, for example, JP S53-19397 A describes reducing oligomers. This makes it less likely for silver streaks or dirt to appear on the molded article, which also reduces the influence on subsequent secondary processing steps such as plating. In the case of the suspension polymerization method and the emulsion polymerization method, where oligomer formation is essentially so small that it is undetectable, problems caused by oligomers do not occur. In the emulsion polymerization method, when the amount of emulsifier blended is large, deterioration thermal stability (discoloration due to heat) and the like occurs due to the influence of the emulsifier. Therefore, the suspension polymerization method is preferred.

[Aromatic polycarbonate resin (C)]

There are no particular limitations on the aromatic polycarbonate resin (C) (hereinafter sometimes referred to as the "component (C)"). As the component (C), one having a viscosity average molecular weight (Mv) of 10,000 to 100,000, and particularly 15,000 to 30,000 is preferably used. When the viscosity average molecular weight (Mv) of the aromatic polycarbonate resin (C) is within the above range, the impact resistance and moldability of the resulting molded article will be more excellent.

The viscosity average molecular weight (Mv) of the aromatic polycarbonate resin (C) is measured for a solution using methylene chloride as a solvent by using an Ubbelohde viscometer, and calculated by using the following Schnell viscosity formula.

$$[\eta] = 1.23 \times 10^{-4} \, Mv^{0.83}$$

(In the formula, $\eta$ represents the intrinsic viscosity, and Mv represents the viscosity average molecular weight.)

Such aromatic polycarbonate resin (C) is usually produced by reacting a dihydric phenol with a carbonate precursor by a solution method or a melting method. The dihydric phenol used here is 2,2-bis(4-hydroxyphenyl)propane (bisphenol A), but it may be partially or completely replaced with another dihydric phenol. Examples of the other dihydric phenols include bis(4-hydroxyphenyl)methane, 1,1-bis(4-hydroxyphenyl)ethane, 2,2-bis(4-hydroxy-3,5-dimethylphenyl) propane, bis(4-hydroxyphenyl)sulfone, and the like.

Examples of the carbonate precursors include a carbonyl halide, a carbonyl ester, a haloformate, and the like. Specific examples include phosgene, diphenyl carbonate, dihaloformates of dihydric phenols, and mixtures thereof.

When producing the aromatic polycarbonate resin (C), a suitable molecular weight regulator, branching agent, catalyst for promoting the reaction, and the like can also be used.

In the present invention, two or more types of aromatic polycarbonate resins produced in this manner may be mixed and used. For example, two or more types of aromatic polycarbonate resins having different viscosity average molecular weights (Mv) can be mixed and adjusted to the above mentioned suitable viscosity average molecular weight (Mv).

[Metal oxide (D)]

There are no particular limitations on the metal oxide (D) in the present invention. Examples of the metal oxide (D) include titanium oxide, zinc oxide, zinc sulfide, magnesium oxide, aluminum oxide, barium oxide, calcium oxide, molybdenum oxide, and antimony compounds (antimony trioxide). Further examples of these composite oxides include titanium/antimony composite oxides, nickel/titanium/antimony composite oxides, and the like. In the Examples shown below, evaluations are performed on titanium oxide, nickel/titanium/antimony composite oxides, and magnesium oxide, however the metal oxide (D) according to the present invention is not limited to these as long as it is a metal oxide.

The thermoplastic resin composition of the present invention may contain only one of these metal oxides (D), or may contain two or more of them.

These metal oxides (D) are derived from colorants, resin stabilizers, and resin modifiers and are mixed into the thermoplastic resin composition.

The average primary particle size of the metal oxide (D) is preferably within the range of 0.01 to 10 $\mu$m, more preferably 0.05 to 1 $\mu$m, and even more preferably 0.1 to 0.5 $\mu$m, since the plating property may be affected when the average primary particle size is too small or too large.

The average primary particle size of the metal oxide (D) can be calculated as the average of the major axis and minor axis measured for 50 randomly selected particles by observation under an electron microscope and enlarged image analysis.

In the thermoplastic resin composition of the present invention, the content of the metal oxide (D) must be adjusted to 4500 ppm or less. When the content of the metal oxide (D) exceeds 4500 ppm, the appearance and the plating property of the plating film will be impaired.

The content of the metal oxide (D) in the thermoplastic resin composition of the present invention is preferably 4000 ppm or less, more preferably 3000 ppm or less, even more preferably 2000 ppm or less, and particularly preferably 1500 ppm or less. The content of the metal oxide (D) is more preferably 1000 ppm or less, 600 ppm or less, 300 ppm or less, and 200 ppm or less, in this order.

There is no particular restriction on the lower limit of the content of the metal oxide (D) in the thermoplastic resin composition, and it may be 0 ppm, i.e., no metal oxide (D) is contained. Even in particularly small ranges, the metal oxide (D) may be contained in an amount exceeding 0 ppm, such as 0.01 ppm or more, 0.05 ppm or more, 0.1 ppm or more, or 0.5 ppm or more. From the viewpoint of the plating property, the lower the content of the metal oxide (D), the better. When the content of the metal oxide (D) is 200 ppm or less, no significant difference is observed in plating property, and the like.

In order to keep the content of the metal oxide (D) in the thermoplastic resin composition below the above mentioned upper limit, for example, the following methods can be mentioned.

The contamination with metal oxides in the process of producing the rubber-containing graft copolymer (A) and the other resin is prevented.

When using an additive containing a metal oxide or a resin containing a metal oxide as the recycled resin (E) described below, the blending amount of the additive or the resin is adjusted to control the content of the metal oxide (D) in the thermoplastic resin composition.

The method for measuring the content of the metal oxide (D) in the thermoplastic resin composition of the present invention is as described in the Examples section below. The content of the metal oxide (D) can also be calculated from the content of the metal oxide (D) in each component used in the preparation of the thermoplastic resin composition.

As a method for measuring by analysis, for example, in analysis using a fluorescent X-ray device, a calibration curve of the content and intensity according to the type of metal oxide is created from a sample having a known content in advance, and a thermoplastic resin composition sample is measured using the X-ray fluorescent device, and the content can be determined from the measured intensity. The content of the metal oxide can also be determined by using an infrared spectroscopic analyzer (IR) by preparing a calibration curve of the type and content of the metal oxide.

In particular, when the metal oxide content of the sample is low, the polymer and non-polymer components in the sample can be separated using a solvent or the like, and the polymer components can be removed as much as possible before analyzing the metal oxide content of the component using an X-ray fluorescence device or an infrared spectroscopic analyzer.

These measurement methods can also be used to analyze the metal oxide content of recycled materials and the like.

[Recycled Resin (E)]

In the present invention, the recycled resin (E) (hereinafter sometimes referred to as the "recycled resin (E)" or the "component (E)"), such as recycled ABS resin, recycled AS resin, and recycled aromatic polycarbonate resin, can be blended as the other resin.

The recycled resin (E) may be a post-consumer material or a pre-consumer material, and there is no restriction on its source.

In the present invention, when using the recycled resin (E) as the other resin, it is preferable to check at the raw material stage that the content of the metal oxide (D) in the thermoplastic resin composition containing the recycled resin (E) obtained finally is equal to or less than the above mentioned upper limit, and the content of the vinyl cyanide-based monomer component in the acetone-soluble matter is within the following range.

When the content of the metal oxide (D) is outside the range specified in the present invention, it can be adjusted to be within the range by blending the rubber-containing graft copolymer (A), the AS-based resin (B), or the aromatic polycarbonate resin (C) again. This makes it possible to produce the product in an environmentally friendly manner without wasting the recycled resin (E).

[Content of the vinyl cyanide-based monomer component in the acetone-soluble matter]

The thermoplastic resin composition of the present invention is characterized in that the content of the component derived from the vinyl cyanide-based monomer in the acetone-soluble matter contained in the thermoplastic resin composition is 20 to 40 % by mass in the total of the acetone-soluble matter. When the content of the vinyl cyanide-based monomer component in the acetone-soluble matter is within the range, the thermoplastic resin composition has excellent plating property.

From the viewpoint of the plating property, the content of the vinyl cyanide-based monomer component in the total of the acetone-soluble matter is preferably 21 to 35 % by mass, more preferably 22 to 33 % by mass, and even more preferably 24 to 30 % by mass.

The content of the vinyl cyanide-based monomer component in the acetone-soluble matter can be determined by a direct extraction measurement method, such as the method described in the Examples section below, or a method of calculation from the acetone-soluble matter of the raw material used.

<Molecular weight of the acetone-soluble matter>

The mass average molecular weight (Mw) of the acetone-soluble matter in the thermoplastic resin composition of the present invention is preferably 20,000 to 400,000, more preferably 30,000 to 200,000, and even more preferably 40,000 to 180,000. When the mass average molecular weight (Mw) is within the above range, the thermoplastic resin composition of the present invention tends to have better fluidity and impact resistance.

The mass average molecular weight (Mw) of the acetone-soluble matter in the thermoplastic resin composition can be measured as a polystyrene-equivalent value by GPC. Details are as described in the Examples section below.

[Additives]

The thermoplastic resin composition of the present invention may contain additives that are typically blended into thermoplastic resin compositions, if necessary.

Examples of the additives include colorants such as a pigment, a dye, and the like, fillers (carbon black, silica, and the like), a halogen-based flame retardant, a phosphorus-based flame retardant, a stabilizer, a reinforcing agent, a processing aid, a heat resistance agent, an antioxidant, a weather resistance agent, a release agent, a plasticizer, an antistatic agent, and the like.

However, it is preferable to use these additives that do not contain metal oxides or that contain a small amount of metal oxides so that the content of the metal oxide (D) in the thermoplastic resin composition after blending such additives is not more than the above mentioned upper limit.

[Method of producing the thermoplastic resin composition]

The thermoplastic resin composition of the present invention can be produced, for example, as follows.

The component (A) and the other resin such as the AS-based resin (B), the aromatic polycarbonate resin (C), the recycled resin (E), and various additives used as necessary are mixed and dispersed using a V-type blender, a Henschel mixer, or the like. The mixture thus obtained is melt-kneaded using a kneading machine such as an extruder, a Banbury mixer, a pressure kneader, a roll, or the like, and then cut into pellets using a pelletizer or the like.

The thermoplastic resin composition of the present invention is molded to obtain the resin molded article of the present invention.

[Applications of the thermoplastic resin composition]

The thermoplastic resin composition of the present invention is excellent in moldability and physical properties, and is also suitable for secondary processing. Examples of the secondary processing includes plating, painting, silk printing, and the like. In particular, the thermoplastic resin composition of the present invention exhibits excellent effects in plating applications.

(Resin molded article)

The resin molded article of the present invention is obtained by molding the thermoplastic resin composition of the present invention. The resin molded article of the present invention is excellent in impact strength and moldability, and has excellent plating film appearance and plating property.
The resin molded article of the present invention can be made to have excellent mechanical properties such as rigidity and heat resistance by adjusting the type and amount of the other resin used in combination with the rubber-containing graft copolymer (A).
Examples of the molding method of the thermoplastic resin composition of the present invention include an injection molding method, an injection compression molding, an extrusion method, a blow molding method, a vacuum molding method, a compressed air molding method, a calendar molding method, an inflation molding method, a gas injection molding method, and the like. Among these, an injection molding method is preferred because it is suitable for mass production and can produce molded articles having high dimensional accuracy.

(Plated part)

The plated part of the present invention is obtained by plating a part or the whole of the above mentioned resin molded article of the present invention. The plated part of the present invention has the resin molded article of the present invention and a plating film formed on at least a part of the surface of the resin molded article.
The plated part of the present invention can be obtained by plating the resin molded article of the present invention. There is no limitation on the plating method. Examples of the plating method include an electroless plating method, a direct plating method, a non-chrome plating method, and the like.
The plated part of the present invention can provide an excellent part that exhibits sufficient effects in the plating conductor process, has excellent appearance and excellent conductive film formation property, and exhibits the effects even when the plating film is thin.
As a result, the plated part of the present invention can contribute to weight reduction, and also provide environmentally friendly effects such as shortening the plating processing time, reducing the incidence of defective products, and making effective use of recycled resources.
Furthermore, as an additional effect, since the plated part of the present invention uses the resin molded article of the present invention, it has excellent adhesion strength with the plating film, excellent heat and cold cycle resistance, maintains adhesion of the plating film after heat and cold cycles, and has excellent plating appearance.

(Possibilities of applications and uses)

The specific applications of the plated part of the present invention are wide-ranging. The plated part of the present invention is suitable for a wide range of applications, such as industrial products such as automobiles, electrical/electronic/mechanical parts, information/communication devices, water-washing parts, and the like, sports/-leisure/games/decorative products, office supplies, daily necessities, and the like.
Examples of the automotive applications include radiator grilles, door handles, emblems, lamp housings, various moldings and garnishes, wheel caps, and the like.
Examples of the electrical (appliance) applications include various switch buttons, arm handles, refrigerator door handles, mobile phone parts, various housings, and the like.
Examples of the water-washing part applications include various water-washing handle, shower heads, water spouts, and the like.
Examples of the sports/leisure/games/decorative products, and daily necessities applications include pachinko machines, pachislot machines, watch frames, decorative buttons, cosmetic caps, and the like.
Among these, the plated parts of the present invention are preferably used for automotive exterior and interior parts, water-washing parts, and the like.

EXAMPLES

To further specifically explain the present invention, the description will be provided below with reference to the Examples and the Comparative Examples. These Examples do not limit the present invention. "%" expresses % by mass, and "part" expresses part by mass, unless otherwise specified.

In some places, acrylonitrile is abbreviated as "AN", styrene as "ST", and butadiene as "BD".

In the following, the volume average particle size of the rubbery polymer (a1) was measured by the method described in (1) below.

The graft rate of the rubber-containing graft copolymer (A) was measured by the method described in (2) below.

The content of the vinyl cyanide-based monomer component in the acetone-soluble matter of the thermoplastic resin composition was measured by the method described in (3) below.

The content of the vinyl cyanide-based monomer component in the acetone-soluble matter (non-grafted copolymer) of the rubber-containing graft copolymer (A) and the acetone-soluble matter of the AS-based resin (B) were also measured by the method described in (3) below.

The mass average molecular weight (Mw) and molecular weight distribution (Mw/Mn) of the acetone-soluble matter (non-grafted copolymer) of the rubber-containing graft copolymer (A), the AS-based resin (B), and the recycled resin (E) were measured by the method described in (4) below.

The method for measuring the viscosity average molecular weight (Mv) of the aromatic polycarbonate resin (C) was as described above.

The content of the metal oxide (D) was analyzed by the method described in (5) below.

(1) Volume average particle size

The volume average particle size of the rubbery polymer (a1) in a latex was measured at room temperature by using "Microtrac UPA150" (trade name) manufactured by HONEYWELL. The unit is nm.

It is known that there is substantially no difference between the latex particle size of the rubbery polymer (a1) and the rubber particle size of the rubbery polymer (a1) in the resin composition by using the rubbery polymer (a1), and the former is in accord with the latter.

(2) Graft rate

The graft rate of the rubber-containing graft copolymer (A) is calculated on the basis of a formula below.

graft rate (% by mass) = {[ (n) - (m) × L]/[(m) × L]} × 100

In the above formula, n represents mass n (g) of acetone-insoluble matters obtained by placing about 1 g [weighing capacity: m (g)] of the rubber-containing graft copolymer (A) into 20 ml of acetone, performing shaking for 2 hours by using a shaker under a temperature condition of 25°C, and performing centrifugal separation for 60 minutes by using a centrifuge (rotation speed: 23,000 rpm) under a temperature condition of 5°C so as to separate the acetone-insoluble matter and the acetone-soluble matter from each other.

L represents the mass (g) of the rubbery polymer (a1) contained in the rubber-containing graft copolymer (A). The mass of the rubbery polymer (a1) may be determined by using a method for calculating from the polymerization recipe and the degree of polymerization conversion, a method for determining based on an infrared absorption spectrum, or the like.

(3) Content of the vinyl cyanide-based monomer component in the acetone-soluble matter

For Examples 1 to 9 and Comparative Examples 1 to 6, 2 g of each of the thermoplastic resin compositions obtained was added to 40 mL of acetone, shaken for 2 hours with a shaker under a temperature condition of 25°C, and then centrifuged for 60 minutes by using a centrifuge (rotation speed: 23,000 rpm) under a temperature condition of 5°C so as to separate the acetone-soluble matter and the acetone-insoluble matter from each other. The resulting acetone-soluble matter was dropped into methanol to precipitate the polymer component, and the solid matter extracted by filtration was dried in a vacuum dryer for 24 hours. The nitrogen element (N) of the dried solid was measured using a nitrogen element analyzer: JM10 MICRO CORDER (manufactured by J-SCIENCE LAB Co., Ltd.). The content of the vinyl cyanide-based monomer units was calculated from the content of the nitrogen element (N) present in the sample, and this was taken as the content of the vinyl cyanide-based monomer components in the acetone-soluble matter in the thermoplastic resin composition.

The measurement sample of the non-grafted copolymer of the component (A) was prepared by dropping the acetone-soluble matter having the above mentioned graft rate into methanol to precipitate the polymer component, and then filtering and drying in a vacuum dryer for 24 hours. The nitrogen element (N) of the obtained solid was measured and the content of the vinyl cyanide-based monomer units was determined.

For the component (B), the produced component (B) was dissolved in acetone, and the polymer component was precipitated in methanol, then dried in a vacuum dryer for 24 hours. The nitrogen element (N) of the obtained solid was measured and the content of the vinyl cyanide-based monomer units was determined.

When the aromatic polycarbonate resin was included, as in Examples 10 to 12 and Comparative Examples 7 to 9, the content of the vinyl cyanide-based monomer component in the acetone-soluble matter can be measured as follows. However, in this example, the amount of the vinyl cyanide-based monomer in the acetone-soluble matter of the raw material used was calculated by multiplying it by blending ratio of each component.

The resin composition is dissolved in dichloromethane, and then the polymer component was extracted using methanol. The polymer component is refluxed with monoethanolamine to decompose the aromatic polycarbonate resin. It is then washed with 1/10N hydrochloric acid, and the decomposition products are removed by repeating the washing with methanol again. The remaining methanol-insoluble matter is taken out and dried, and then the acetone-soluble matter and acetone-insoluble matter are separated in the same manner as in Example 1 above, and the content of the vinyl cyanide-based monomer component in the acetone-soluble matter is measured.

(4) Mass average molecular weight (Mw) and molecular weight distribution (Mw/Mn)

The mass average molecular weight (Mw) and molecular weight distribution (Mw/Mn) were determined using GPC (GPC: "GPC/V2000" manufactured by Waters Corporation, column: "Shodex AT-G + AT-806MS" manufactured by Showa Denko K.K.) and o-dichlorobenzene (145°C) as a solvent and determined in terms of a polystyrene.

For the measurement sample of the non-grafted copolymer, the acetone-soluble matter having the above mentioned graft rate was dropped into methanol to precipitate the polymer component, and then the solid matter was filtered and dried in a vacuum dryer for 24 hours. The dried solid was used for GPC measurement.

In addition, in the GPC measurement of the component (B) and the component (E), after dissolving the component (B) and the component (E) in acetone, the polymer components were precipitated in methanol, dried in a vacuum dryer for 24 hours, and used for the GPC measurement.

(5) Metal oxide content

A calibration curve of the content of each metal oxide was prepared in advance using an energy dispersive X-ray fluorescence analyzer (EDX-7000) manufactured by Shimadzu Corporation, and the content of each metal oxide was measured using the calibration curve.

For recycled products (E-1) and (E-2), the acetone-insoluble matter was extracted and dried, and the metal oxide content was measured using the same device.

[Rubber-containing graft copolymer (A)]

<Synthesis Example 1: Production of rubber-containing graft copolymer (A-1)>

In a nitrogen-purged reactor, 125 parts of pure water, 0.5 parts of glucose, 0.5 parts of sodium pyrophosphate, 0.005 parts of ferrous sulfate, and 60 parts (solid content equivalent) of polybutadiene (BR) latex having a volume average particle size of 340 nm as a rubbery polymer (a1-1) were charged, and the temperature inside the reactor was raised to 65°C while stirring. The point in time of the internal temperature reaching 65°C was assumed to be the start of polymerization. 30 parts of styrene (ST) and 10 parts of acrylonitrile (AN) were used as a component (a2-1), and the component (a2-1) and 0.25 parts of a chain transfer agent, t-dodecyl mercaptan mixture, were continuously added to the reactor over 5 hours. Simultaneously, an aqueous solution of a polymerization initiator consisting of cumenehydroperoxide (0.2 parts) and disproportionated rosin acid sodium salt (0.4 parts) was continuously added over 7 hours so as to complete the reaction. The resulting latex was mixed with 1 part of 2,2'-methylenebis(4-methyl-6-t-butylphenol) relative to 100 parts of latex solid contents. Subsequently, the latex (100 parts of the polymer component) was coagulated using 5% sulfuric acid so that the ratio of the coagulant was 2 parts, and then it was washed, filtered, and dried to obtain a powder-like rubber-containing graft copolymer (A-1).

This rubber-containing graft copolymer (A-1) had a rubber (the component (a1-1)) content of 59.8% and a graft rate of 45%. The content of the vinyl cyanide-based monomer component in the acetone-soluble matter was 24.8%, the mass average molecular weight (Mw) was 48,000, and the molecular weight distribution (Mw/Mn) was 3.1.

<Synthesis Example 2: Production of rubber-containing graft copolymer (A-2)>

In a nitrogen-purged reactor, 125 parts of pure water, 0.5 parts of glucose, 0.5 parts of sodium pyrophosphate, 0.005 parts of ferrous sulfate, and 50 parts (solid content equivalent) of poly(butadiene-styrene) (SBR) latex having a volume average particle size of 310 nm as a rubbery polymer (a1-2) were charged, and the temperature inside the reactor was raised to 65°C while stirring. The point in time of the internal temperature reaching 65°C was assumed to be the start of polymerization. 35.5 parts of styrene (ST) and 14.5 parts of acrylonitrile (AN) were used as a component (a2-2), the component (a2-2) and 0.20 parts of a chain transfer agent, t-dodecyl mercaptan mixture, were continuously added to the reactor over 5 hours. Simultaneously, an aqueous solution of a polymerization initiator consisting of cumenehydroperoxide (0.2 parts) and disproportionated rosin acid sodium salt (0.7 parts) was continuously added over 7 hours so as to complete the reaction. The resulting latex was mixed with 1 part of 2,2'-methylenebis(4-methyl-6-t-butylphenol) relative to 100 parts of latex solid contents, and a powder-like rubber-containing graft copolymer (A2) was obtained in the same manner as in Synthesis Example 1.

This rubber-containing graft copolymer (A-2) had a rubber (the component (a1-2)) content of 49.8% and a graft rate of 46%. The content of the vinyl cyanide-based monomer component in the acetone-soluble matter was 28.7%, the mass average molecular weight (Mw) was 68,000, and the molecular weight distribution (Mw/Mn) was 2.8.

<Synthesis Example 3: Production of rubber-containing graft copolymer (A-3)>

In a nitrogen-purged reactor, 125 parts of pure water, 0.5 parts of glucose, 0.5 parts of sodium pyrophosphate, 0.005 parts of ferrous sulfate, and 50 parts (solid content equivalent) of polybutadiene (BD) latex having a volume average particle size of 290 nm as a rubbery polymer (a1-3) were charged, and the temperature inside the reactor was raised to 65°C while stirring. The point in time of the internal temperature reaching 65°C was assumed to be the start of polymerization. 37.5 parts of styrene (ST) and 12.5 parts of acrylonitrile (AN) were used as a component (a2-3), and the component (a2-3) and 0.25 parts of a chain transfer agent, t-dodecyl mercaptan mixture, were continuously added to the reactor over 5 hours. Simultaneously, an aqueous solution of a polymerization initiator consisting of cumenehydroperoxide (0.2 parts) and disproportionated rosin acid sodium salt (0.7 parts) was continuously added over 7 hours so as to complete a reaction. The resulting latex was mixed with 1 part of 2,2'-methylenebis(4-methyl-6-t-butylphenol) relative to 100 parts of latex solid contents. Subsequently, the latex (100 parts of the polymer component) was salted out with 5% calcium chloride so that the ratio of the coagulant was 2 parts, and then washed, filtrated, and dried to obtain a powder-like rubber-containing graft copolymer (A-3).

This rubber-containing graft copolymer (A-3) had a rubber (the component (a1-3)) content of 49.9% and a graft rate of 80%. The content of the vinyl cyanide-based monomer component in the acetone-soluble matter was 26.9%, the mass average molecular weight (Mw) was 67,000, and the molecular weight distribution (Mw/Mn) was 3.1.

[AS-based resin (B)]

<Synthesis Example 4: Production of AS-based resin (B-1)>

A nitrogen-purged reactor was charged with 120 parts of water, 0.002 parts of sodium alkylbenzenesulfonate, 0.5 parts of polyvinyl alcohol, 0.3 parts of azoisobutyronitrile, and 0.62 parts of t-dodecyl mercaptan, as well as a monomer mixture consisting of 23 parts of acrylonitrile and 77 parts of styrene, and the temperature was raised from an initial temperature of 60°C for 5 hours while gradually adding a portion of styrene, until the temperature reached 120°C. After further reacting at 120°C for 4 hours, the obtained polymer was removed and an AS-based resin (B-1) with acrylonitrile/styrene=23/77 was obtained.

The content of the vinyl cyanide-based monomer component in the acetone-soluble matter of the obtained AS-based resin (B-1) was 23.1%, the mass average molecular weight (Mw) was 154,000, and the molecular weight distribution (Mw/Mn) was 2.1.

<Synthesis Example 5: Production of AS-based resin (B-2)>

An AS-based resin (B-2) with acrylonitrile/styrene=27/73 was obtained in the same manner as in Synthesis Example 4, except that 0.55 parts of t-dodecyl mercaptan, and a monomer mixture consisting of 28 parts of acrylonitrile and 72 parts of styrene were used.

The content of the vinyl cyanide-based monomer component in the acetone-soluble matter of the obtained AS-based resin (B-2) was 28.2%, the mass average molecular weight (Mw) was 116,000, and the molecular weight distribution (Mw/Mn) was 2.0.

<Synthesis Example 6: Production of AS-based resin (B-3)>

An AS-based resin (B-3) with acrylonitrile/styrene=35/65 was obtained in the same manner as in Synthesis Example 4, except that 0.65 parts of t-dodecyl mercaptan, and a monomer mixture consisting of 35 parts of acrylonitrile and 65 parts of styrene were used.

The content of the vinyl cyanide-based monomer component in the acetone-soluble matter of the obtained AS-based resin (B-2) was 34.8%, the mass average molecular weight (Mw) was 91,000, and the molecular weight distribution (Mw/Mn) was 2.1.

[Aromatic polycarbonate resin (C)]

The following commercially available product was used as the aromatic polycarbonate resin (C).

Aromatic polycarbonate resin (C-1): "S3000" manufactured by Mitsubishi Engineering-Plastics Corporation (viscosity average molecular weight (Mv): 22,000)

[Metal oxide (D)]

The following commercially available products were used as the metal oxide (D).

Magnesium oxide (D-1): "Kyowamag 150" manufactured by Kyowa Chemical Industry Co., Ltd. (average primary particle size: 4.16 $\mu$m)

Ti/Sb/Ni composite oxide (D-2): "42-401A" manufactured by TOMATEC Co., Ltd. ((Ti, Sb, Ni)O$_2$, average primary particle size: 1 $\mu$m)

Titanium oxide (D-3): "TITANIX JR-405" manufactured by TAYCA Corporation (titanium dioxide, average primary particle size: 0.3 $\mu$m)

[Recycled resin (E)]

<Recycled ABS resin (E-1)>

Analysis of a recycled ABS resin (white) collected from the market revealed that the content of the metal oxide (titanium oxide) was 30,000 ppm. In addition, the rubber content in the resin composition was 13.1%, and the graft rate was 76%. The content of the vinyl cyanide-based monomer component in the acetone-soluble matter was 25.3%, the mass average molecular weight (Mw) was 132,000, and the molecular weight distribution (Mw/Mn) was 2.4.

This was used as the recycled ABS resin (E-1).

<Recycled ABS resin (E-2)>

Analysis of a recycled ABS resin (black) collected from the market revealed that content of the metal oxide (titanium/antimony/nickel complex oxide) was 5,000 ppm. In addition, the rubber content in the resin composition was 14.9%, and the graft rate was 68%. The content of the vinyl cyanide-based monomer component in the acetone-soluble matter was 23.4%, the mass average molecular weight (Mw) was 158,000, and the molecular weight distribution (Mw/Mn) was 2.6.

This was used as the recycled ABS resin (E-2).

<Recycled aromatic polycarbonate resin (E-3)>

An aromatic polycarbonate resin recovered from unnecessary optical disks was used.

The recovery method is as follows.

40 recovered optical disks were placed in a CD stripping solution (manufactured by Nihon maruseru Co., Ltd.) and immersed for 15 minutes while slowly stirring with a rod to dissolve and remove the metal parts. The disk-shaped aromatic polycarbonate resin was then washed with water and dried. This process was repeated for a total of 200 disks.

The obtained disk-shaped aromatic polycarbonate resin was crushed by a crusher to obtain pieces having a size of about 4 mm x 4 mm. The viscosity average molecular weight (Mv) of this recycled aromatic polycarbonate resin (E-3) was 15,000.

[Examples 1 to 12, Comparative Examples 1 to 9]

The components (A), (B), (D), and (E) shown in Tables 1 and 2 were mixed in the proportions (parts) shown in the Tables. Furthermore, 0.2 parts of Adeka STAB "A-60 (trade name)" (tetrakis [methylene-3- (3',5'-di-t-butyl-4'-hydroxyphenyl) propionate] methane) manufactured by ADEKA Corporation and 0.1 parts of "Kaowax EB-G (trade name)" (ethylene bis-stearic acid amide) manufactured by Kao Corporation were blended and mixed. The mixture was melt-kneaded using a vacuum vent-equipped twin-screw extruder ("PCM30" manufactured by Ikegai Co., Ltd.) having a screw diameter of 30 mm at a cylinder temperature of 200 to 260°C and a vacuum of 93.325 kPa. The kneaded product was taken up as a strand and pelletized using a pelletizer ("SH type pelletizer" manufactured by Souken Corporation) to obtain pellets of each thermoplastic resin composition.

The mass average molecular weight (Mw) of the acetone-soluble matter in the obtained thermoplastic resin composition was measured by the method described above, and the results are shown in Tables 1 and 2 as "Mass average molecular weight (Mw) of acetone-soluble matter".

Furthermore, the content of the vinyl cyanide-based monomer component in the acetone-soluble matter of the thermoplastic resin composition was measured using the method described above, and the results are shown in Tables 1 and 2 as "Vinyl cyanide-based monomer component content in acetone-soluble matter."

The following tests were carried out using the obtained thermoplastic resin composition pellets, and the results are shown in Tables 1 and 2.

[Evaluation of fluidity: measurement of melt volume rate (MVR)]

The MVR (cm$^3$/10 min) of each thermoplastic resin composition pellet was measured at a temperature of 220°C and a load of 98 N (10 kg) in accordance with ISO 1133 standard. MVR is an index of the fluidity of a thermoplastic resin composition, and the higher the MVR, the better the fluidity.

[Preparation of evaluation test piece and test method]

<Preparation of test piece (a)>

Each thermoplastic resin composition pellet was injection molded using an injection molding machine (product name "IS55FP-1.5A" manufactured by Shibaura Machine Co., Ltd.) under the conditions of a cylinder temperature of 220 to 250°C and a mold temperature of 60°C to obtain test piece (a) having a length of 80 mm, width of 10 mm and thickness of 4 mm. The test piece (a) was used for measurement of Charpy impact strength.

<Evaluation of impact resistance: Measurement of Charpy impact strength>

A Charpy impact test (notched) was performed on test piece (a) at 23°C in accordance with ISO 179 standard to measure Charpy impact strength. The higher the value, the better the impact resistance.

<Preparation of test piece (b)>

Each thermoplastic resin composition pellet was injection molded using a 75-ton injection molding machine ("JSW-75EIIP" manufactured by The Japan Steel Works, Ltd.) and a plating adhesion strength evaluation mold (length of 90 mm x width of 50 mm x thickness of 3 mm) under conditions of cylinder temperature of 250°C, mold temperature of 60°C, and injection speed of 20 mm/sec to obtain a test piece (b).

<Plating treatment process 1>

For the test piece (b), a 1 cm portion on the opposite side (lower side) of the gate was masked. The obtained plate for plating was degreased by immersing it in a CRP cleaner (manufactured by Okuno Chemical Industries Co., Ltd.) at 50°C for 5 minutes. After degreasing, the plate was washed with water at 20°C and then immersed in an etching solution (chromic acid; 400 g/L, sulfuric acid; 200 cc/L) at 68°C for 10 minutes to perform etching. After etching, the plate was washed with water at 20°C, and then immersed in a CRP reducer (manufactured by Okuno Chemical Industries Co., Ltd.) at 25°C for 1 minute to perform neutralization. After neutralization, the plate was washed with water at 20°C, pre-dipped in hydrochloric acid at 25°C for 1 minute, and then immersed in a CRP catalyst (manufactured by Okuno Chemical Industries Co., Ltd.) at 40°C for 5 minutes to perform Pd-Sn colloidal catalyst treatment. After catalyst treatment, the plate was washed with water at 20°C, and then immersed in a CRP selector A, B (manufactured by Okuno Chemical Industries Co., Ltd.) at 45°C for 7 minutes to perform a conductor treatment. After conductor treatment, the plate was washed with water at 20°C. Then, electrolytically cupper plating was carried out at 20°C for 40 minutes to deposit an electrolytically copper plated film having a film thickness of 30 μm on the flat plate. The plate was washed with water at 20°C after electrolytically copper plating, and then dried at 80°C for 2 hours to obtain plating treatment sample 1.

<Evaluation of Plating property 1>

[Appearance: Visual]

The plating treatment sample 1 was visually inspected for the presence of defective seediness such as irregularities or unevenness on the surface, and judged according to the following criteria.

◎: No problems at all (good product)

○: There are small seediness, unevenness, and the like. (usable after consideration of subsequent plating)

△: There are moderate seediness, unevenness, and the like. (high possibility of defective product)

✕: There are large seediness, unevenness, and the like, and no action possible (defective product: cannot be used)

[Electrodeposition property: Covering property]

The surface of the plating treatment sample 1 was visually inspected to see whether the copper plating conductive film was formed with good adhesion and whether it was electroplated, and judged according to the following criteria.

◎: No problem at all (good product)

○: There are some areas that are not electroplated in areas where the impact is small, such as contact points. (usable)

△: Less than 10% of areas are not electroplated. (not covered, not usable)

✕: More than 10% or 10% of areas are not electroplated. (not covered, not usable)

[Adhesion strength]

For the plating treatment sample 1, a 1 cm wide cut was made in the plating film from the masked area, and the plating film was peeled off vertically from the non-plated area on a load measuring device to measure its strength. Based on the measured value, the plating adhesion strength was judged according to the following criteria.

◎: Plating adhesion strength is 12 N/cm or more, very excellent.

○: Plating adhesion strength is 9 N/cm or more and less than 12 N/cm, practically acceptable.

△: Plating adhesion strength is 9 N/cm or less, usable depending on the application.

<Plating treatment process 2>

For the test piece (b), a 1 cm portion on the opposite side (lower side) of the gate was masked. Then, this plate for plating was degreased by immersing it in a CRP cleaner (manufactured by Okuno Chemical Industries Co., Ltd.) at 50°C for 5 minutes. After degreasing, the plate was washed with water at 20°C and then immersed in an etching solution (chromic acid; 400 g/L, sulfuric acid; 200 cc/L) at 68°C for 10 minutes to perform etching. After etching, the plate was washed with water at 20°C, and then immersed in a CRP reducer (manufactured by Okuno Chemical Industries Co., Ltd.) at 25°C for 1 minute to perform neutralization. After neutralization, the plate was washed with water at 20°C, pre-dipped in hydrochloric acid at 25°C for 1 minute, and then immersed in a CRP catalyst (manufactured by Okuno Chemical Industries Co., Ltd.) at 40°C for 5 minutes to perform Pd-Sn colloidal catalyst treatment. After catalyst treatment, the plate was washed with water at 20°C, and then immersed in a CRP selector A, B (manufactured by Okuno Chemical Industries Co., Ltd.) at 45°C for 7 minutes to perform a conductor treatment. After conductor treatment, the plate was washed with water at 20°C. Then, electrolytically cupper plating was carried out at 20°C for 15 minutes to deposit an electrolytically copper plated film having a film thickness of 15 $\mu$m on the flat plate.

After electrolytically copper plating, the plate was washed with water at 20°C, and then electrolytically nickel plating was performed at 55°C for 8 minutes to further deposit electrolytic nickel plated film having a film thickness of 5 $\mu$m. After electrolytically nickel plating, the flat plate was washed with water at 20°C, and then electrolytically chromium plating was performed at 45°C for 2 minutes to further deposit electrolytically chromium plated film having a film thickness of 0.3 μm. The test piece was then dried at 80°C for 2 hours. At the same time, the masking was removed, and a non-plated portion was also created at the same time to obtain plating treatment sample 2.

<Evaluation of plating property 2>

[Appearance: Visual]

The plating treatment sample 2 was visually inspected for the presence of defective seediness such as irregularities or unevenness on the surface, and judged according to the following criteria.

◎: No problems at all (good product)

○: There are small seediness, unevenness, and the like. (usable after consideration of subsequent plating)

△: There are moderate seediness, unevenness, and the like. (high possibility of becoming defective product)

×: There are large seediness, unevenness, and the like, and no action possible (defective product: cannot be used)

[Appearance after heat and cold cycles]

The plating treatment sample 2 was subjected to 8 cycles of cooling at -40°C for 1 hour and heating at 80°C for 1 hour. After that, the condition of the plating film of the sample 2 was visually observed, and the appearance after heat and cold cycles was judged according to the following criteria.

◎: No discoloration (good product)

○: There is very slight discoloration, swelling, and the like (usable after consideration of subsequent plating)

△: There is slight swelling, and the like (can be used depending on the application)

×: There are large seediness, unevenness, and the like, and no action possible (defective product: cannot be used)

[Table 1]

<Table 1>

| | | Example | | | | | | | Comparative Example | | | |
|---|---|---|---|---|---|---|---|---|---|---|---|---|
| | | 1 | 2 | 3 | 4 | 5 | 6 | 7 | 1 | 2 | 3 | 4 |
| Rubber-containing graft copolymer (A) | (A-1) | 15 | 20 | | | | | | 15 | | | |
| | (A-2) | | | 30 | | 30 | 35 | | | 30 | 30 | |
| | (A-3) | | | | 30 | | | 30 | | | | 30 |
| AS-based resin (B) | (B-1) | 85 | 30 | | | | | | 85 | | 70 | |
| | (B-2) | | 50 | 50 | 30 | | 65 | 70 | | 70 | | |
| | (B-3) | | | 20 | 40 | 70 | | | | | | 70 |
| Metal oxide (D) | (D-1) | | 0.001 | 0.01 | 0.01 | | 0.05 | | | 0.3 | 1 | |
| | (D-2) | | | | 0.04 | | 0.05 | 0.3 | | | | 0.3 |
| | (D-3) | | | | | 0.08 | 0.05 | | 0.5 | 0.4 | | 1 |
| Metal oxide (D) content in thermoplastic resin composition | ppm | 0 | 10 | 100 | 500 | 800 | 1500 | 3000 | 5000 | 7000 | 10000 | 13000 |
| Rubbery poly-mer (a1) con-tent in ]ther-moplastic resin composition | % | 9 | 12 | 15 | 15 | 15 | 17.5 | 15 | 9 | 15 | 15 | 15 |
| Vinyl cyanide-based mono-mer compo-nent content in acetone-solu-ble matter | % | 23.0 | 26.1 | 29.9 | 31.8 | 34.3 | 28.1 | 28.0 | 23.0 | 28.1 | 23.6 | 34.7 |

(continued)

| | | Example | | | | | | | Comparative Example | | | |
|---|---|---|---|---|---|---|---|---|---|---|---|---|
| | | 1 | 2 | 3 | 4 | 5 | 6 | 7 | 1 | 2 | 3 | 4 |
| Mass average molecular weight (Mw) of acetone-soluble matter | | 152,000 | 127,000 | 104,000 | 100,000 | 89,000 | 109,000 | 114,000 | 152,000 | 111,000 | 145,000 | 90,000 |
| MVR | cm³/10min. | 41 | 31 | 28 | 25 | 24 | 28 | 27 | 40 | 27 | 29 | 25 |
| Charpy impact strength | kJ/m² | 13 | 18 | 26 | 28 | 26 | 33 | 27 | 13 | 28 | 27 | 28 |
| Plating property evaluation 1 | Appearance (visual: unevenness, seediness) | ◎ | ◎ | ◎ | ◎ | ◎ | ◎ | ○ | Δ | Δ | ※ | Δ |
| | Electrodeposition property (covering property) | ○ | ◎ | ◎ | ◎ | ◎ | ○ | ○ | Δ | Δ | × | Δ |
| | Adhesion strength | ○ | ◎ | ◎ | ◎ | ◎ | ◎ | ○ | ○ | Δ | ※ | Δ |
| Plating property evaluation 2 | Appearance (visual: unevenness, seediness) | ○ | ◎ | ◎ | ◎ | ○ | ○ | ○ | × | × | × | × |
| | Appearance after heat and cold cycles (discoloration, swelling, etc.) | ◎ | ◎ | ◎ | ○ | ◎ | ◎ | ○ | ○ | Δ | ※ | Δ |

※: Cannot be evaluated

[Table 2]

[Table 2]

<Table 2>

| | | Example | | | | | Comparative Example | | | | |
|---|---|---|---|---|---|---|---|---|---|---|---|
| | | 8 | 9 | 10 | 11 | 12 | 5 | 6 | 7 | 8 | 9 |
| Rubber-containing graft copolymer (A) | (A-1) | 15 | | | | | | | | | |
| | (A-2) | | 20 | 35 | | 25 | | | 35 | | 20 |
| | (A-3) | | | | 35 | | | | | 35 | |
| AS-based resin (B) | (B-1) | 75 | | 15 | | | | | 15 | | |
| | (B-2) | | 50 | | 15 | 10 | | | | 15 | |
| | (B-3) | | | | | | | | | | |
| Aromatic polycarbonate resin (C) | (C-1) | | | 50 | 50 | 40 | | | 50 | 50 | 40 |
| Recycled resin (E) | (E-1) | 10 | 5 | | | 5 | 50 | 5 | | | 20 |
| | (E-2) | | 10 | | | | 50 | 95 | | | |
| | (E-3) | | | | | 20 | | | | | 20 |
| Metal oxide (D) | (D-1) | | | | | | | | | 0.3 | |
| | (D-2) | | | | | | | | 0.3 | | |
| | (D-3) | | | 0.2 | 0.3 | | | | 0.3 | 1 | |
| Metal oxide (D) content in thermoplastic resin composition | ppm | 3000 | 2000 | 2000 | 3000 | 1500 | 17500 | 6250 | 6000 | 13000 | 6000 |
| Rubbery polymer (a1) content in ]thermoplastic resin composition | % | 10.3 | 12.2 | 17.5 | 17.5 | 13.2 | 14.0 | 14.9 | 17.5 | 17.5 | 12.6 |
| Vinyl cyanide-based monomer component content in acetone-soluble matter | % | 23.3 | 27.4 | 25.2 | 27.8 | 27.7 | 24.4 | 23.5 | 25.2 | 27.8 | 26.2 |
| Mass average molecular weight (Mw) of acetone-soluble matter | | 149,000 | 117,000 | 121,000 | 106,000 | 103,000 | 145,000 | 156,000 | 120,000 | 106,000 | 115,000 |
| MVR | $cm^3$/10min. | 40 | 31 | 9 | 12 | 16 | 29 | 28 | 9 | 12 | 15 |

| | | Example | | | | | Comparative Example | | | | |
|---|---|---|---|---|---|---|---|---|---|---|---|
| | | 8 | 9 | 10 | 11 | 12 | 5 | 6 | 7 | 8 | 9 |
| Charpy impact strength | kJ/m$^2$ | 15 | 17 | 75 | 73 | 59 | 18 | 17 | 75 | 69 | 55 |
| Plating property evaluation 1 | Appearance (visual: unevenness, seediness) | ◎ | ◎ | ◎ | ◎ | ◎ | ※ | ※ | Δ | ※ | Δ |
| | Electrodeposition property (covering property) | ○ | ○ | ○ | ○ | ○ | × | × | Δ | × | Δ |
| | Adhesion strength | ○ | ◎ | ◎ | ○ | ◎ | ※ | ※ | Δ | ※ | Δ |
| Plating property evaluation 2 | Appearance (visual: unevenness, seediness) | ○ | ○ | ○ | ○ | ○ | × | × | × | × | × |
| | Appearance after heat and cold cycles (discoloration, swelling, etc.) | ○ | ◎ | ○ | Δ | ○ | ※ | ※ | × | ※ | × |
| ※: Cannot be evaluated | | | | | | | | | | | |

**EP 4 692 245 A1**

[Discussion]

The thermoplastic resin compositions of Examples 1 to 12 exhibit excellent effects in the evaluation of plating property.

On the other hand, Comparative Examples 1 to 9 have a problem with poor appearance due to seediness or unevenness because the metal oxide content exceeds the range of the present invention. In addition, they do not obtain conductivity for plating and adhesion strength.

Although the present invention has been described in detail by way of the specific modes, it is apparent for those skilled in the art that various changes can be made without departing from the spirit and scope of the present invention.

The present application is based on Japanese Patent Application No. 2023-062220, filed on April 6, 2023, the entire contents of which are incorporated herein by reference.

**Claims**

1.  A thermoplastic resin composition comprising a resin component of 100 parts by mass, the resin component comprising:

      10 to 50 parts by mass of a rubber-containing graft copolymer (A); and
      50 to 90 parts by mass of another resin,
      the rubber-containing graft copolymer (A) being obtained by graft polymerizing 30 to 80% by mass of a rubbery polymer (a1) with 20 to 70% by mass of a vinyl-based monomer mixture (a2) comprising an aromatic vinyl-based monomer and a vinyl cyanide-based monomer wherein a total of the rubbery polymer (a1) and the vinyl-based monomer mixture (a2) is 100% by mass,
      wherein a content of the vinyl cyanide-based monomer component in a total of an acetone-soluble matter contained in the thermoplastic resin composition is 20 to 40% by mass, and
      a content of a metal oxide (D) in the thermoplastic resin composition is 4500 ppm or less.

2.  The thermoplastic resin composition according to claim 1, wherein the other resin includes an AS-based resin (B) and/or an aromatic polycarbonate resin (C).

3.  The thermoplastic resin composition according to claim 1, wherein the other resin includes a recycled resin (E) .

4.  A resin molded article produced by molding the thermoplastic resin composition according to any one of claims 1 to 3.

5.  A plated part wherein plating is applied to a part or the whole of the resin molded article according to claim 4.

## INTERNATIONAL SEARCH REPORT

| International application No. |
| --- |
| **PCT/JP2024/004528** |

| A. | CLASSIFICATION OF SUBJECT MATTER |
| --- | --- |

*C08L 101/00*(2006.01)i; *C08L 25/12*(2006.01)i; *C08L 55/00*(2006.01)i; *C08L 69/00*(2006.01)i
FI:   C08L101/00; C08L55/00; C08L25/12; C08L69/00

According to International Patent Classification (IPC) or to both national classification and IPC

| B. | FIELDS SEARCHED |
| --- | --- |

Minimum documentation searched (classification system followed by classification symbols)

C08L101/00; C08L25/12; C08L55/00; C08L69/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2002-256043 A (TECHNO POLYMER CO., LTD.) 11 September 2002 (2002-09-11) paragraphs [0047]-[0049], table 1, example 1 | 1-5 |
| X | JP 2019-6920 A (UMG ABS LTD.) 17 January 2019 (2019-01-17) p. 5, lines 14-15, p. 6, lines 39-41, paragraphs [0016], [0019], p. 8, lines 35-39, paragraph [0023], table 1, example 1 | 1-4 |
| A | | 5 |
| X | JP 2019-26716 A (UMG ABS LTD.) 21 February 2019 (2019-02-21) paragraphs [0073]-[0077], table 1, example 1 | 1-4 |
| A | | 5 |

☐ Further documents are listed in the continuation of Box C.    ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **15 March 2024** | **02 April 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT
### Information on patent family members

International application No.

**PCT/JP2024/004528**

| Patent document cited in search report | | | Publication date (day/month/year) | Patent family member(s) | | | Publication date (day/month/year) |
|---|---|---|---|---|---|---|---|
| JP | 2002-256043 | A | 11 September 2002 | US | 2002/0120062 | A1 | |
| | | | | paragraphs [0103]-[0109], table 1, example 1 | | | |
| | | | | CN | 1365985 | A | |
| JP | 2019-6920 | A | 17 January 2019 | US | 2020/0181400 | A1 | |
| | | | | paragraphs [0033], [0049], [0063], [0066], [0067], [0072], [0076], [0077], table 1, example 1 | | | |
| | | | | WO | 2019/003981 | A1 | |
| | | | | EP | 3647370 | A1 | |
| | | | | CN | 110785465 | A | |
| JP | 2019-26716 | A | 21 February 2019 | WO | 2019/021546 | A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020158706 A
- JP S5319397 A

- JP 2023062220 A